# EUROPEAN PATENT APPLICATION

(11) **EP 1 953 206 A2**
(43) Date of publication of application: **06.08.2008**
(21) Application number: 08001851.8
(22) Date of filing: 31.01.2008
(51) Int. Cl.: C09K 11/77, G21K 4/00

(54) **Radiation image conversion panel**

(30) Priority: 31.01.2007 JP 2007022007
(71) Applicant: FUJIFILM Corporation, Minato-ku Tokyo (JP)
(72) Inventor: Nakamura, Shigeru, Kaisei-machi, Ashigara-kami-gun, Kanagawa (JP); Hasegawa, Ken, Kaisei-machi, Ashigara-kami-gun, Kanagawa (JP)
(74) Representative: Klunker . Schmitt-Nilson . Hirsch

(57) **Abstract**

The radiation image conversion panel includes a substrate having a metallic surface, a polyparaxylylene layer formed on the metallic surface of the substrate, an oxide layer being formed on the polyparaxylylene layer and including an oxide represented by the following formula: MₓO_{y} wherein M is an element selected from the group consisting of Si, Ge, Sn, Ti, Zr and Al, when M is Si, Ge, Sn, Ti or Zr, x is 1 and y is 2, and when M is Al, x is 2 and y is 3, and a phosphor layer formed on the oxide layer by vapor-phase deposition.

## Description

The entire contents of a document cited in this specification are incorporated herein by reference.

### BACKGROUND OF THE INVENTION

The present invention relates to a radiation image conversion panel such as an imaging plate (IP) or a scintilator panel. More specifically, the invention relates to a radiation image conversion panel that is capable of protecting the panel substrate against corrosion and is excellent in durability.

Upon exposure to a radiation (e.g. X-rays, α-rays, β-rays, γ-rays, electron beams, and ultraviolet rays), certain types of phosphors known in the art accumulate part of the energy of the applied radiation and, in response to subsequent application of exciting light such as visible light, they emit photostimulated luminescence in an amount that is associated with the accumulated energy. Called "storage phosphors" or "stimulable phosphors", those types of phosphors find use in medical and various other fields.

A known example of such use is a radiation image information recording and reproducing system that employs a radiation image conversion panel having a layer of the stimulable phosphor. The system has already been commercialized by, for example, FUJIFILM Corporation under the trade name of FCR (Fuji Computed Radiography).

In that system, a subject such as a human body is irradiated with X-rays or the like to record (form) a radiation image about the subject on the conversion panel (more specifically, the phosphor layer). After the radiation image is thus recorded, the conversion panel is scanned two-dimensionally with exciting light to emit photostimulated luminescence which, in turn, is read photoelectrically to yield an image signal. Then, an image reproduced on the basis of the image signal is output as the radiation image of the subject, typically to a display device such as a CRT (cathode ray tube) display or on a recording material such as a photosensitive material.

The conversion panel is typically prepared by the following method: Powder of a stimulable phosphor is dispersed in a solvent containing a binder and other necessary ingredients to make a coating solution, which is applied to a panel-shaped support made of glass or a resin, with the applied coating being subsequently dried.

As described in JP 2004-251883 A, also known are phosphor panels which are prepared by forming a phosphor layer on a substrate through vapor-phase deposition techniques (vacuum film deposition techniques) such as vacuum deposition and sputtering. The phosphor layer formed by such vapor-phase deposition has superior characteristics in that it is formed in vacuo and hence has low impurity levels and that being substantially free of any ingredients other than the stimulable phosphor as exemplified by a binder, the phosphor layer not only has small scatter in performance but also features very highly efficient luminescence. As another type of a radiation image conversion panel, a scintilator panel with Na activated CsI phosphor is also known.

The phosphor layer formed by vapor-phase deposition particularly using an alkali halide-based phosphor such as Eu activated CsBr or Na activated CsI has a columnar crystal structure. In this phosphor layer, light such as photostimulated luminescence is not dispersed over the plane of the conversion panel while light from the deep portion (the substrate side) can also be taken out with high efficiency to thereby obtain a conversion panel with high sensitivity and sharpness (obtain a radiation image with high sharpness).

This characteristic feature is more effectively achieved by using a substrate whose surface has light reflectivity. In other words, the substrate surface having light.reflectivity enables light traveling toward the substrate side to be also taken out with high efficiency, resulting in obtaining a conversion panel with higher sensitivity and sharpness.

An aluminum plate (aluminum alloy plate) whose surface has been mirror-polished has light reflectivity and is light in weight, and is therefore very often used for the substrate.

However, as is well known, halides and in particular those having absorbed moisture considerably erode aluminum. Therefore, in the case where a phosphor layer of a halide such as an alkali halide is to be formed on an aluminum substrate, it is necessary to provide between the substrate and the phosphor layer a separation layer which serves to separate the substrate from the phosphor layer to prevent corrosion of the substrate due to the phosphor used.

JP 2004-251883 A discloses that a polyparaxylylene layer is used for this separation layer.

As is well known, polyparaxylylene is obtained by polymerizing paraxylylene or a derivative thereof, and a polyparaxylylene layer (hereinafter referred to simply as a "parylene layer") made of a polyparaxylylene film is excellent in corrosion resistance, heat resistance and gas impermeability and is employed for the dielectric film of a capacitor and various protective films.

### SUMMARY OF THE INVENTION

Although the parylene layer is superior in its capability to separate the phosphor layer from the substrate, the adhesion force between the parylene layer and the phosphor layer reduces with time. Therefore, durability achieved is not sufficiently high to prevent the phosphor layer from coming off during its use, thus rendering the conversion panel unusable.

An object of the present invention is to solve the conventional problems as described above by providing a radiation image conversion panel which uses a stimulable phosphor or the like and in which a parylene layer is used as a separation layer for separating the phosphor layer from the substrate to advantageously prevent corrosion of the substrate due to the phosphor while keeping high adhesion force between the parylene layer and the phosphor layer, whereby the radiation image conversion panel will have no peeling of the phosphor layer for an extended period of time and be excellent in durability.

In order to achieve the above object, the present invention provides a radiation image conversion panel including:
a substrate having a metallic surface;
a polyparaxylylene layer formed on the metallic surface of the substrate;
an oxide layer being formed on the polyparaxylylene layer and comprising an oxide represented by the following formula:

   MₓO_{y}

   wherein M is an element selected from the group consisting of Si, Ge, Sn, Ti, Zr and Al, when M is Si, Ge, Sn, Ti or Zr, x is 1 and y is 2, and when M is Al, x is 2 and y is 3; and
a phosphor layer formed on the oxide layer by vapor-phase deposition.

In the radiation image conversion panel according to the present invention, the phosphor layer preferably includes an alkali halide-based phosphor.

The metallic surface of the substrate preferably includes aluminum or an aluminum alloy. It is particularly preferable for the substrate to include aluminum or an aluminum alloy.

The polyparaxylylene layer preferably has a thickness of 2 to 20 µm. The oxide layer preferably has a thickness of 0.05 to 3 µm. The oxide layer is preferably formed by vacuum deposition while applying plasma radiation to a surface of the polyparaxylylene layer on which the oxide layer is to be formed. The polyparaxylylene layer is preferably surface-modified.

According to the present invention having the features described above, the radiation image conversion panel such as an imaging plate (IP) or a flat panel detector uses a polyparaxylylene layer as the separation layer for separating the phosphor layer and the substrate from each other to advantageously prevent corrosion of the substrate due to the phosphor. The radiation image conversion panel also has an oxide layer made up of a particular oxide such as silicon oxide to enable a sufficient adhesion force to be obtained between the polyparaxylylene layer and the phosphor layer while preventing its reduction, so that the radiation image conversion panel obtained will be excellent in durability and have no peeling of the phosphor layer for an extended period of time.

### BRIEF DESCRIPTION OF THE DRAWINGS

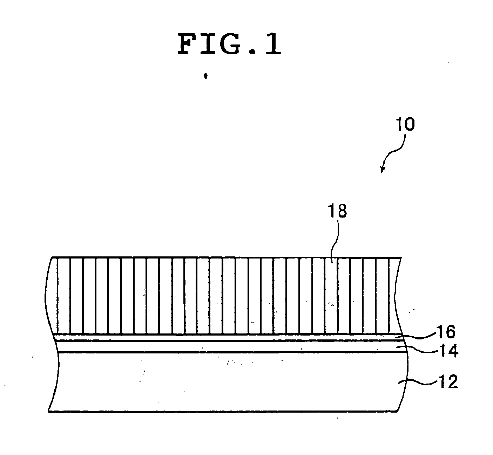

FIG. 1 is a schematic diagram of an embodiment of a radiation image conversion panel of the present invention.

### DETAILED DESCRIPTION OF THE PREFERRED EMBODIMENTS

On the pages that follow, the radiation image conversion panel according to the present invention is described in detail with reference to the preferred embodiment depicted in the accompanying drawing.

FIG. 1 shows in concept an exemplary radiation image conversion panel of the present invention.

A radiation image conversion panel (hereinafter referred to as a "conversion panel") 10 shown in FIG. 1 basically includes a substrate 12, a polyparaxylylene layer 14, an oxide layer 16, and a phosphor layer 18.

The conversion panel 10 has the phosphor layer 18 comprising a stimulable phosphor and is a so-called imaging plate (IP) in which radiation having been transmitted through a subject is accumulated (recorded) therein to form a radiation image and exciting light is applied to emit photostimulated luminescence corresponding to the formed radiation image.

The present invention is not particularly limited to the conversion panel 10 having the phosphor layer 18 of a stimulable phosphor but may be applied to a radiation image conversion panel (scintillator panel) such as a flat panel detector that has a phosphor layer which emits light (fluorescence) in response to incidence of radiation.

In the present invention, various types are available for the substrate 12 of the conversion panel 10 without any particular limitation, as long as the substrate has a metallic surface. In the conversion panel 10, the surface of the substrate 12 is also required to act as a surface from which photostimulated luminescence emitted from the phosphor layer 18 is reflected, and hence preferably has a high light reflectivity such as mirror surface property.

In terms of lightness in weight and of obtaining excellent light reflectivity, preferable examples of the substrate 12 include those made of aluminum and aluminum alloys. Alternatively, the substrate 12 obtained by forming a metallic film such as an aluminum film or an aluminum alloy film on the surface of a base material such as a glass plate or a resin plate may also be advantageously used.

Various trace components such as magnesium for preventing corrosion may of course be contained in the substrate 12 made of a metal or in the metallic film formed on the surface of the base material.

The parylene layer 14 is a separation layer provided between the phosphor layer 18 and the substrate 12 to separate the substrate 12 from the phosphor layer 18 (also including a phosphor melt and vapors generated by absorbed moisture) in order to prevent the substrate 12 from being corroded by the phosphor layer 18.

Prior to the formation of the parylene layer 14, the surface of the substrate 12 is preferably cleaned and more preferably cleaned by degreasing with an alkaline cleaner containing a silicate salt. Following the cleaning and drying, it is preferable to also perform a primer treatment with a primer for use in the parylene layer (polyparaxylylene film) 14 such as trimethoxysilylpropyl methacrylate.

Each of the cleaning and the primer treatment of the substrate 12 may be performed by a method known in the art using a known cleaner or primer. In the case of the primer treatment using trimethoxysilylpropyl methacrylate, for example, the trimethoxysilylpropyl methacrylate is evaporated to expose the substrate 12 (on which the parylene layer is to be formed) to the generated vapors.

The parylene layer (polyparaxylylene layer) 14 is in the form of a film formed by polymerizing paraxylylene or a derivative thereof and is excellent in corrosion resistance, heat resistance and gas impermeability.

In the present invention, as described above, the parylene layer 14 is provided as the separation layer (barrier layer) for separating the phosphor layer 18 and the substrate 12 from each other to prevent the corrosion of the substrate 12 due to the phosphor used to form the phosphor layer 18. The substrate 12 of the conversion panel 10 of the present invention thus exhibits markedly excellent corrosion resistance.

There is no particular limitation on the parylene layer 14 of the present invention but various known parylene films may be used.

More specifically, illustrative films comprise parylenes (polyparaxylylenes) represented by the following formulae:

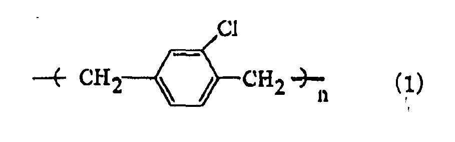

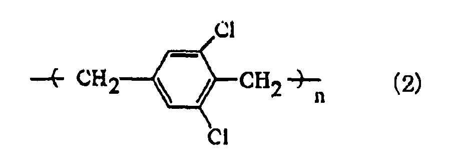

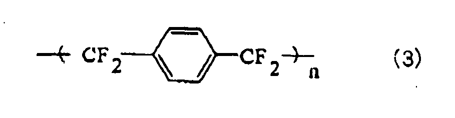

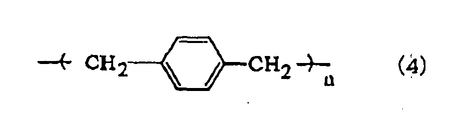

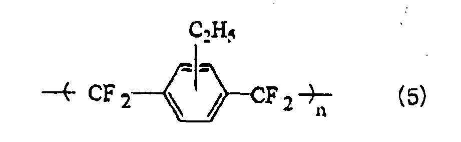

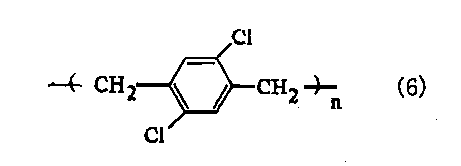

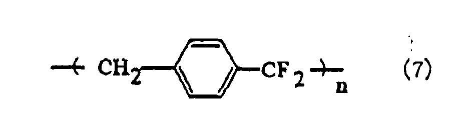

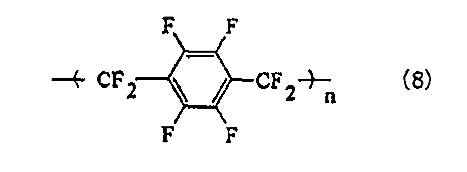

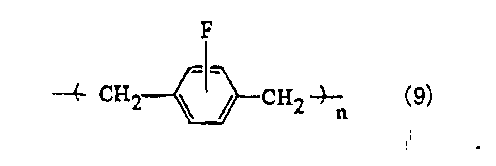

Among these, Parylene C (polymonochloroparaxylylene) represented by Formula (1), Parylene D. (polydichloroparaxylylene) represented by Formula (2), Parylene HT (polytetrafluoroparaxylylene) represented by Formula (3) and Parylene N (polyparaxylylene) represented by Formula (4) are advantageously used. In terms of the properties such as heat resistance, a parylene composed of a fluorine-substituted paraxylene derivative is also advantageously used. Parylene HT is used with particular advantage.

There is no particular limitation on the method of forming the parylene layer 14. The parylene layer 14 is formed by various known vapor-phase deposition techniques such as vacuum deposition, sputtering, chemical vapor deposition (CVD) and plasma polymerization, usually by chemical vapor deposition and more precisely by vapor deposition polymerization.

The parylene layer 14 is formed by an exemplary method which includes three steps, that is, a first step in which diparaxylylene or other solid dimer is used as a starting material to be vaporized; a second step in which diradical paraxylylene is generated by the thermal decomposition of the dimer; and a third step in which adsorption of the diradical paraxylylene onto the substrate 12 and its polymerization occur simultaneously to form a high molecular weight polyparaxylylene film.

During these steps, the degree of vacuum is generally 0.1 to 100 Pa (10⁻³ to 1 Torr). The first, second and third steps are usually performed at 100 to 200°C, at 450 to 750°C, and at room temperature, respectively. The third step may be performed by optionally setting the temperature of the substrate 12 in the range of room temperature to 100°C.

The thickness of the parylene layer 14 in the conversion panel 10 of the present invention is not particularly limited and is preferably 2 to 20 µm.

Preferable results are obtained in terms of its high capability to separate the phosphor layer 18 and the substrate 12 from each other by setting the thickness of the parylene layer 14 within the above range. The parylene layer 14 more preferably has a thickness of 10 to 20 µm.

The conversion panel 10 has the parylene layer 14, which is covered with the oxide layer 16, which in turn is covered with the phosphor layer 18.

In the conversion panel 10 of the present invention, it is preferable to perform a surface modifying treatment of the parylene layer 14 prior to the formation of the oxide layer 16 in order to improve the adhesion between the parylene layer 14 and the oxide layer 16.

There is no particular limitation on the surface modifying method applied to the parylene layer 14.

Various surface treatments performed to improve the film adhesion as exemplified by plasma treatment, ionic treatment, UV treatment (UV irradiation), corona discharge, ozone cleaning and physical surface roughening are all available.

Of these, plasma treatment and ionic treatment are more preferred because these treatments can be followed by any treatment within the vacuum deposition device. These surface treatments may be performed by any known methods.

The oxide layer 16 is a layer comprising an oxide represented by the following formula:

MₓO_{y}

wherein M is an element selected from the group consisting of Si, Ge, Sn, Ti, Zr and Al. When M is Si, Ge, Sn, Ti or Zr, x is 1 and y is 2. When M is Al, x is 2 and y is 3.

In the conversion panel 10 of the present invention, the oxide layer 16 is a so-called adhesion-improving layer provided to improve the adhesion between the parylene layer 14 and the phosphor layer 18.

As mentioned above, the radiation image conversion panel may often suffer from corrosion of the substrate caused by the phosphor constituting the phosphor layer due to moisture absorbed in the phosphor layer or other factor. Particularly in the case of using a halide for the phosphor and aluminum for the substrate, the phosphor considerably erodes the substrate.

In order to solve such a problem, it is known to provide between the phosphor layer and the substrate a separation layer for separating them from each other. The parylene layer is known as a separation layer.

The parylene layer has markedly excellent capability to separate the substrate from the phosphor layer. However, the adhesion force between the parylene layer and the phosphor layer reduces with time to cause the phosphor layer to come off. In other words, sufficient durability cannot be achieved.

In view of such a situation, the conversion panel 10 of the present invention has the oxide layer 16 comprising a specified oxide between the parylene layer 14 and the phosphor layer 18. Presence of the oxide layer 16 enables a sufficient adhesion force to be obtained between the parylene layer 14 and the phosphor layer 18 while also preventing the adhesion force between them from being decreased with time.

Therefore, according to the present invention, the parylene layer 14 can advantageously prevent corrosion of the substrate 12 due to the phosphor to thereby realize the conversion panel 10 with particularly excellent durability without causing peeling of the phosphor layer 18 even after it has been used for an extended period of time.

As described above, the oxide layer 16 is made of a film of a member selected from the group consisting of silicon oxide (SiO₂), germanium oxide (GeO₂), tin oxide (SnO₂), titanium oxide (TiO₂), zirconium oxide (ZrO₂) and aluminum oxide (Al₂O₃). Silicon oxide and aluminum oxide are preferably used in terms of excellent adhesion between the parylene layer 14 and the phosphor layer 18 and easy film deposition.

The thickness of the oxide layer 16 is not particularly limited and is preferably 0.05 to 3 µm.

A thickness of the oxide layer 16 within the above range enables the adhesion between the parylene layer 14 and the phosphor layer 18 to be improved and is therefore preferable.

The oxide layer 16 more preferably has a thickness of 0.1 to 2 µm.

There is no particular limitation on the method of forming the oxide layer 16, but any known thin-film forming techniques such as vacuum deposition, sputtering, CVD and plasma polymerization may be used.

Vacuum deposition is particularly preferable. Any known heating methods can be used and vacuum deposition may be performed by resistance heating, heating using an electron gun, or ion beam heating. A heating method is appropriately selected according to the film-forming materials. Exemplary methods that may be particularly preferred include plasma-assisted vapor deposition in which film deposition is performed while irradiating the substrate during vapor deposition (surface of the parylene layer 14) with plasma using such a device as a plasma gun, ion-assisted vapor deposition in which film deposition is performed while irradiating the substrate during vapor deposition with ions using such a device as an ion gun, and ion plating in which film deposition is performed while applying an electric field to the substrate for ion collision.

Use of the plasma-assisted vapor deposition, ion-assisted vapor deposition and ion plating enables the oxide layer 16 formed to be compact and to have excellent adhesion, with plasma-assisted vapor deposition being particularly preferred because the oxide layer 16 formed can have more excellent adhesion.

As described above, in the conversion panel 10 of the present invention, the surface of the parylene layer 14 is preferably modified prior to the formation of the oxide layer 16 to achieve high adhesion between the parylene layer 14 and the oxide layer 16. By forming the oxide layer 16 by the above-mentioned plasma-assisted vapor deposition, the same result is obtained as that attained by performing plasma treatment or ionic treatment on the surface of the parylene layer 14 prior to the formation of the oxide layer 16. In other words, use of the plasma-assisted vapor deposition or the like enables the oxide layer 16 to be formed in the same state as the surface-modified parylene layer 14 without separately providing a surface modifying step for the parylene layer 14.

The oxide layer 16 can be formed (vapor-deposited) by the plasma-assisted vapor deposition basically in the same manner as the conventional vacuum deposition techniques except that film deposition is performed while introducing plasma in the film deposition system using a device such as a plasma gun.

Therefore, there is no particular limitation on the method of heating the film-forming material, and as described above, all the methods used in vacuum deposition as exemplified by resistance heating and electron beam heating are available. The conditions for film deposition may be appropriately determined according to the configuration of a vapor deposition device used, pumping capacity, film-forming material, film deposition rate to be achieved, and thickness of the oxide layer 16.

When plasma-assisted vapor deposition or ion-assisted vapor deposition is performed, the surface of the substrate (parylene layer 14) is preferably subjected to cleaning and surface modification by actuating a plasma gun or an ionic gun for about 10 to 30 minutes prior to the formation of the oxide layer 16.

In the conversion panel 10, the oxide layer 16 is covered with the phosphor layer 18. As schematically shown in FIG. 1, the phosphor layer 18 formed by vacuum deposition and in particular the phosphor layer 18 comprising an alkali halide-based phosphor have a columnar crystal structure.

There is no particular limitation on the stimulable phosphor used to form the phosphor layer 18 in the method of manufacturing the conversion panel 10 of the present invention, but various known phosphors may be used.

In terms of obtaining excellent photostimulated luminescence characteristics, alkali halide-based stimulable phosphors represented by the general formula "M^{I}X·aM^{II}X'2·bM^{III}X"3:cA" as disclosed in JP 61-72087 A are advantageously used. In this formula, M^{I} represents at least one element selected from the group consisting of Li, Na, K, Rb, and Cs. M^{II} represents at least one divalent metal selected from the group consisting of Be, Mg, Ca, Sr, Ba, Zn, Cd, Cu, and Ni. M^{III} represents at least one trivalent metal selected from the group consisting of Sc, Y, La, Ce, Pr, Nd, Pm, Sm, Eu, Gd, Tb, Dy, Ho, Er, Tm, Yb, Lu, Al, Ga, and In. X, X', and X" each represent at least one element selected from the group consisting of F, Cl, Br, and I. A represents at least one element selected from the group consisting of Eu, Tb, Ce, Tm, Dy, Pr, Ho, Nd, Yb, Er, Gd, Lu, Sm, Y, Tl, Na, Ag, Cu, Bi, and Mg, 0 ≤ a < 0.5, 0 ≤ b < 0.5, and 0 < c ≤ 0.2.

Of these, an alkali halide-based stimulable phosphor in which M^{I} contains at least Cs, X contains at least Br, and A is Eu or Bi is preferred, and a stimulable phosphor represented by the general formula "CsBr:Eu" is more preferred because they have excellent photostimulated luminescence characteristics and the effects of the present invention are advantageously achieved.

Various other stimulable phosphors disclosed in, for example, US 3,859,527, JP 55-12142 A, JP 55-12144 A, JP 55-12145 A, JP 56-116777 A, JP 58-69281 A, JP 58-206678 A, and JP 59-38278 A and JP 59-75200 A may also be advantageously used.

The radiation image conversion panel manufactured in the present invention is not limited to the conversion panel 10 having the phosphor layer,18 comprising a stimulable phosphor, but may be, as described above, a radiation image conversion panel having the phosphor layer comprising a phosphor that emits light (fluorescence) in response to incidence of radiation.

Any known phosphors may be used, but in terms of readily achieving the effects of the present invention and obtaining excellent photostimulated luminescence characteristics, alkali metal halide-based phosphors represented by the general formula "M^{I}X·aM^{II}X'₂·bM^{III}X"₃:zA" are preferably used. In this formula, M^{I} represents at least one alkali element selected from the group consisting of Li, Na, K, Rb, and Cs. M^{II} represents at least one alkaline earth metal or divalent metal selected from the group consisting of Be, Mg, Ca, Sr, Ba, Ni, Cu, Zn and Cd. M^{III} represents at least one rare earth element or trivalent metal selected from the group consisting of Sc, Y, La, Ce, Pr, Nd, Pm, Sm, Eu, Gd, Tb, Dy, Ho, Er, Tm, Yb, Lu, Al, Ga, and In. X, X' , and X" each represent at least one halogen selected from the group consisting of F, Cl, Br, and I. A represents at least one rare earth element or metal selected from the group consisting of Y, Ce, Pr, Nd, Sm, Eu, Gd, Tb, Dy, Ho, Er, Tm, Yb, Lu, Na, Mg, Cu, Ag, Tl, and Bi, 0 ≤ a < 0.5, 0 ≤ b < 0.5, and 0 < z < 1.0.

In particular, it is preferred in the above general formula for M^{I} to contain Cs, for X to contain I and for A to contain Tl or Na, and z preferably has a value in the range of 1 x 10⁻⁴ ≤ z ≤ 0.1. An alkali metal halide-based phosphor represented by the formula "CsI:Tl" is particularly preferably used.

Even in the case of the phosphor layer 18 comprising such a halide, the parylene layer 14 of the conversion panel 10 of the present invention ensures separation of the substrate 12 from the phosphor layer 18, thus advantageously preventing corrosion of the substrate 12 due to the phosphor.

The oxide layer 16 enables the conversion panel 10 of the present invention to have an excellent adhesion between the phosphor layer 18 and the parylene layer 14 for an extended period of time and is very highly durable.

In the conversion panel 10 of the present invention, there is no particular limitation on the method of forming the phosphor layer 18, but various vapor-phase deposition techniques such as sputtering and CVD are all available, with vacuum deposition being advantageously used in terms of the film deposition rate and the crystal structure of the phosphor layer to be formed.

Particularly in the case where the phosphor layer 18 of a stimulable phosphor is to be formed, it is preferred to form the phosphor layer by two-source vacuum deposition in which film-forming materials, one for the phosphor component and the other for the activator component, are heated to evaporate in separate crucibles (evaporation sources).

There is no particular limitation on the conditions for film deposition and heating means when vacuum deposition is performed.

The phosphor layer 16 preferably has a satisfactory columnar crystal structure composed of discrete columnar crystals, because light such as photostimulated luminescence is not dispersed over the plane of the conversion panel while light from the deep portion (the substrate side) can also be taken out with high efficiency to thereby achieve high sensitivity and sharpness (obtain a radiation image with high sharpness).

A preferred method capable of forming the phosphor layer 18 having a satisfactory columnar crystal structure includes first evacuating a system to a high degree of vacuum, then introducing an argon gas, a nitrogen gas or the like into the system to achieve a degree of vacuum between about 0.01 Pa and 3 Pa (which is hereinafter referred to as "medium degree of vacuum" for the sake of convenience), and heating the film-forming materials by resistance heating or the like to perform vacuum deposition under such medium degree of vacuum. As already mentioned, the phosphor layer 18 having columnar crystals is formed by vapor-phase deposition. The phosphor layer 18 formed under the medium degree of vacuum, in particular, the phosphor layer 18 of an alkali halide-based phosphor such as CsBr:Eu has an especially satisfactory columnar crystal structure.

The phosphor layer 18 is thus formed to prepare the conversion panel 10, after which a thermal treatment (annealing) is further optionally performed as in conversion panels known in the art.

Then, the phosphor layer 18 is hermetically sealed with a moisture-proof protective layer.

While the radiation image conversion panel according to the present invention has been described above in detail, the present invention is by no means limited to the foregoing embodiment and it should be understood that various improvement and modifications can of course be made without departing from the scope and spirit of the invention.

### EXAMPLES

On the following pages, the radiation image conversion panel of the present invention is described in greater detail with reference to specific examples. It should of course be understood that the present invention is by no means limited to the following examples.

### Example 1

A plate made of an aluminum alloy (A5083) whose surface had been mirror-polished and which had an area of 100 mm × 100 mm and a thickness of 10 mm was prepared for the substrate 12.

The surface of the substrate 12 on which the phosphor layer 18 was to be formed was cleaned with a cleaner, rinsed with water and dried. Thereafter, the substrate surface was subjected to a primer treatment using trimethoxysilylpropyl methacrylate as a primer in a vacuum device including an evaporation chamber and a substrate treatment chamber.

More specifically, the substrate 12 was loaded into the substrate treatment chamber of the vacuum device at its predetermined position and a vessel containing trimethoxysilylpropyl methacrylate was set in the evaporation chamber.

After the vacuum device was closed, the substrate treatment chamber was evacuated to a degree of vacuum of 0.4 Pa. With continued evacuation, the temperature of the evaporation chamber was increased from room temperature to 35°C and the degree of vacuum of the substrate treatment chamber was adjusted to about 13 Pa. Under these conditions, the surface of the substrate 12 was exposed to the trimethoxysilylpropyl methacrylate primer to perform the primer treatment.

A vapor deposition device for parylene film deposition including a material evaporation chamber, a thermal decomposition chamber and a vapor deposition chamber was used to form the parylene layer 14 of Parylene HT having a thickness of 10 µm by chemical vapor deposition on the surface of the substrate 12 which had undergone the primer treatment and which had a ultrathin primer film formed thereon.

More specifically, ditetrafluoroparaxylylene was introduced into the material evaporation chamber of the vapor deposition device at its predetermined position and the substrate 12 was loaded into the vapor deposition chamber at its predetermined position.

After having been closed, the vapor deposition device was evacuated to a degree of vacuum of 0.4 Pa while the thermal decomposition chamber was heated to and kept at 700°C. Then, the temperature of the material evaporation chamber was increased from 100°C to 160°C to form a Parylene HT film with a thickness of 10 µm on the surface of the substrate 12 at a rate of about 2 µm/h.

Then, a silicon oxide (SiO₂) film with a thickness of 0.1 µm was formed as the oxide layer 16 by vacuum deposition on the surface of the parylene layer 14. The above-mentioned plasma-assisted vapor deposition in which film deposition is performed while introducing plasma in the film deposition system was used as the vacuum deposition method to form the oxide layer 16.

More specifically, the substrate 12 having the parylene layer 14 formed thereon was loaded into a vacuum deposition device equipped with a plasma gun at its predetermined position, while silicon oxide (SiO₂) as the film-forming material was loaded into crucibles disposed at predetermined positions of the device. The plasma gun was attached so as to emit plasma radiation toward the substrate 12 set at the predetermined position. This vacuum deposition device is a device for heating film-forming materials by ion beams.

The vacuum deposition device was closed to evacuate the interior of the device to a degree of vacuum of 1 × 10⁻⁴ Pa. Thereafter, the plasma gun was actuated at a discharge current of 20A to emit plasma (argon plasma) radiation onto the surface of the substrate 12 (parylene layer 14).

After the elapse of 30 minutes from the start of actuation of the plasma gun, argon gas was introduced into the device to adjust the internal pressure of the device to 1 × 10⁻² Pa with the plasma gun kept actuated. Heating of the film-forming material by ion beams was started to form a silicon oxide film with a thickness of 0.1 µm as the oxide layer 16 at a vapor deposition rate of 10 Å/s.

The (stimulable) phosphor layer 18 of CsBr:Eu was formed on the surface of the oxide layer 16 by two-component vacuum deposition which used europium bromide and cesium bromide as the (film-forming) material for activator component and as the (film-forming) material for phosphor component, respectively.

The film-forming materials were both heated in a resistance heating device using tantalum crucibles and a DC source capable of outputting a power of 6 kW.

After setting the substrate 12 having the oxide layer 16 formed thereon on the substrate holder of the vacuum deposition device and the respective film-forming materials at predetermined positions of the vacuum deposition device, respectively, the vacuum chamber was closed and switched on to perform evacuation using a diffusion pump and a cryogenic coil.

When the degree of vacuum had reached 8 x 10⁻⁴ Pa, argon gas was introduced into the vacuum chamber to adjust the degree of vacuum to 0.8 Pa; then, the DC source was driven so that an electric current was applied to the crucibles to start formation of the phosphor layer on the substrate surface. The power to be delivered from the DC source to the crucibles was controlled based on a preliminary experiment so that the phosphor layer was formed at a molarity ratio of Eu/Cs of 0.003:1 and a film deposition rate of 8 µm/min. The substrate was heated by the heating means so that the temperature of the substrate surface before the start of formation of the phosphor layer by vapor deposition reached 160°C.

At the point in time when the thickness of the phosphor layer reached about 700 µm, the DC source was switched off to stop the application of an electric current to the crucibles and the heater for heating the substrate to thereby end the formation of the phosphor layer.

At the point in time when the temperature of the substrate 12 reached 100°C, the substrate (conversion panel 10) was detached from the substrate holder and taken out of the vacuum chamber. Thereafter, the substrate 12 was heated under a nitrogen atmosphere at a temperature of 200°C for 2 hours to prepare the conversion panel 10.

### Example 2

Example 1 was repeated except that a zirconium oxide (zrO₂) film with a thickness of 0.1 µm was formed as the oxide layer 16, thereby preparing the conversion panel 10.

The oxide layer 16 was formed in the same manner as in forming the silicon oxide film in Example 1 except that zirconium oxide (ZrO₂) was used as the film-forming material.

### Example 3

Example 1 was repeated except that a titanium oxide (TiO₂) film with a thickness of 0.1 µm was formed as the oxide layer 16, thereby preparing the conversion panel 10.

The oxide layer 16 was formed in the same manner as in forming the silicon oxide film in Example 1 except that.titanium trioxide (Ti₂O₃) was used as the film-forming material and argon gas was replaced by a gas mixture of Ar and O₂ (volume ratio: 1/1).

### Example 4

Example 1 was repeated except that a tin oxide (SnO₂) film with a thickness of 0.1 µm was formed as the oxide layer 16, thereby preparing the conversion panel 10.

The oxide layer 16 was formed in the same manner as in forming the silicon oxide film in Example 1 except that tin oxide (SnO₂) was used as the film-forming material and argon gas was replaced by a gas mixture of Ar and O₂ (volume ratio: 1/1).

### Comparative Example 1

Example 1 was repeated except that the oxide layer 16 was not formed, thereby preparing the conversion panel.

The conversion panels prepared in Examples 1 to 4 and Comparative Example 1 were subjected to a heat cycle test under the conditions as described below.

### [Heat cycle test]

Each conversion panel sealed in an aluminum pack was placed in an environment tester, and temperature increase and decrease within the range of 0°C to 50°C were repeated at a rate of 15 times per 24 hours in total 500 times. More specifically, the temperature was increased from 0°C to 50°C over 48 minutes, then decreased from 50°C to 0°C over 48 minutes and this cycle was repeated.

Following the heat cycle test, the conversion panel was taken out of each pack and the ratio of portions where the phosphor layer 14 came off the conversion panel was visually determined.

As a result, in the conversion panel in Comparative Example 1, about 80% of the phosphor layer 18 was found to come off (this percentage refers to the ratio of the peeling area to the total area). On the other hand, in the conversion panels 10 in Examples 1 to 4 of the present invention, the phosphor layer 18 was found not to come off at all. It was thus revealed that these conversion panels were excellent in in-use durability.

From the foregoing results, the effects of the present invention are apparent.

## Claims

1. A radiation image conversion panel comprising:
a substrate having a metallic surface;
a polyparaxylylene layer formed on said metallic surface of said substrate;
an oxide layer being formed on said polyparaxylylene layer and comprising an oxide represented by the following formula:
MₓO_{y}
wherein M is an element selected from the group consisting of Si, Ge, Sn, Ti, Zr and Al, when M is Si, Ge, Sn, Ti or Zr, x is 1 and y is 2, and when M is Al, x is 2 and y is 3; and
a phosphor layer formed on said oxide layer by vapor-phase deposition.

2. The radiation image conversion panel according to claim 1, wherein said phosphor layer comprises an alkali halide-based phosphor.

3. The radiation image conversion panel according to claim 1 or 2, wherein the metallic surface of said substrate comprises aluminum or an aluminum alloy.

4. The radiation image conversion panel according to claim 3, wherein said substrate comprises aluminum or an aluminum alloy.

5. The radiation image conversion panel according to any one of claims 1 to 4, wherein said polyparaxylylene layer has a thickness of 2 to 20 µm.

6. The radiation image conversion panel according to any one of claims 1 to 5, wherein said oxide layer has a thickness of 0.05 to 3 µm.

7. The radiation image conversion panel according to any one of claims 1 to 6, wherein said oxide layer is formed by vacuum deposition while applying plasma radiation to a surface of the polyparaxylylene layer on which said oxide layer is to be formed.

8. The radiation image conversion panel according to any one of claims 1 to 7, wherein said polyparaxylylene layer is surface-modified.
